# EUROPEAN PATENT SPECIFICATION

(11) **EP 2 937 476 B1**
(45) Date of publication and mention of the grant of the patent: **12.10.2016**
(21) Application number: 15164625.4
(22) Date of filing: 22.04.2015
(51) Int. Cl.: E03C 1/02, E03C 1/042, F16K 43/00

(54) **AN EMBEDDED FAUCET ASSEMBLY**
EINGEBETTETE WASSERHAHNBAUGRUPPE
ENSEMBLE DE ROBINET INTÉGRÉ

(30) Priority: 23.04.2014 CN 201410166946
(43) Date of publication of application: 28.10.2015
(73) Proprietor: Jiangmen Fenix Shower Products Technology Co., Ltd., Guangdong (CN)
(72) Inventor: FENG, Jijun, Jiangmen City Guangdong (CN)
(74) Representative: Wright, Howard Hugh Burnby

(56) References cited:
- WO-A1-00/34698
- BE-A- 413 966
- CN-A- 101 509 560
- CN-U- 202 561 191
- DE-A1- 3 009 599
- DE-A1-102005 041 920
- US-A- 3 026 898
- US-A1- 2006 207 664
- US-A1- 2013 312 856

## Description

### Technical Field

The present invention relates to a faucet assembly according to the preamble of claim 1.

### Background of the Invention

At the present, the built-in solution, which embeds the main body of a faucet into a wall body and only exposes the switch handle out of the wall is adopted in most of the faucets mounted on the wall of a bathroom, and is applied extensively in view of its advantages such as simply and convenient installation and saving space. For the conventional embedded faucets, after embedding the portion of the main body of the faucets into the wall body, the corresponding repairing and replacing shall be completed after switching off the master valve for the water source while the valve core is closed due to the poor water quality or a requirement that the appearance style of the faucets needs to be changed; however in many resident living quarters, the master valves for the water source pertain to the common and shared water valve, thus switching off the master valves of the source may affect the normal water use for the residents in the whole residential buildings; in particular for the hotel in modem style, the faucets of the shower rooms of all the rooms are communicated with one another and the water source is controlled by a master valve, thus the master valve must be switched off when the faucet of one bathroom needs to be replaced, , and this affects the normal use of the other shower rooms and increases the maintenance cost of for the hotel. Furthermore, the faucets for the sprinkler in the bathrooms are generally the cold and hot water faucets which occur the cases of the unstable water pressure due to the water pressure differential between the cold and hot water, and this result in the situation that the water is sometimes hot and sometimes cold; when this situation occurs, the usage effect for these faucets may be rather poor, and may lead to the uncomfortable feel for the user while using. Therefore, the embedded faucet with the structure in the conventional prior art still needs to be improved.

CN 202561191 U discloses an embedded faucet assembly which comprises a lower main body embedded in a wall, and an upper main body fixed on the outer part of the lower main body, wherein the upper main body comprises an installing board, wherein four upper main body interfaces are symmetrically arranged in the circumference of the inner surface of the installing board, the lower main body comprises a connecting plate, four water pipes are fixed on the connecting plate and are communicated to the four lower main body interfaces symmetrically arranged in the circumference of the inner surface of the connecting plate in a one-to-one correspondence manner, the connecting plate and the installing board are tightly clung, and the upper main body interfaces are communicated and connected with the lower main body interfaces in a one-to-one correspondence manner. Compared with the prior art, the utility model has the advantages that the embedded faucet assembly provided by the utility model is simple and convenient for an installing process; and especially, when the lower main body embedded in the wall is reversely installed, the re-embedded installation is not needed, the upper main body is directly fixed on the lower main body, so that the embedded faucet assembly can be normally used; and meanwhile, compared with the traditional insertion type line sealing connecting structure, the embedded faucet assembly is lower in processing precision requirements of parts, and has better sealing property.

CN 101509560 A discloses a single-handle constant-temperature pressure-measuring valve core which comprises a valve sleeve, a temperature adjusting component arranged in an inner cavity of the valve sleeve from top to bottom in concert with the valve sleeve, a thermal sensitive element, an adjustor and an offsetting spring as well as a water diversion mechanism and a compress sealing part which are sheathed in the inner cavity of the valve sleeve; a cold water inlet and a hot water inlet are opened on the valve sleeve, and a water outlet is opened in the middle of the valve sleeve; the water diversion mechanism matches with the cold water inlet and the hot water inlet to control the cold water passage and the hot water passage, and a cold water control port and a hot water control port which are matched with the cold water passage and the hot water passage are provided; the compress sealing part forms an airtight space together with the inner cavity of the valve sleeve and presses the water diversion mechanism inside the valve sleeve; under the action of the thermal sensitive element and the offsetting spring, the adjustor floats between the cold water control port and the hot water control port. In the invention, the constant temperature is guaranteed, meanwhile a zigzag water inlet passage is formed, which has an obvious effect on balancing the water inlet pressure, and the valve core also has the advantages of simple structure, security and reliability.

US 3,026,898 discloses hand operated valves, and more particularly to improvements applicable preferably to wall valve units so termed because they are concealed in the wall or the like except for the valve stem and the handle thereon projecting from the surface of the wall.

DE 10 2005 041 920 A1 discloses the connector block (100) includes connections (101,102) for water supply lines and connections (103,104) for water drain lines. The connections are linked to discharge channels (121,122,123,124) which are formed with tube drillings (111,112,113,114) at the coupling side. Auxiliary drillings are also formed from the coupling side on the connection channels (125,126) provided between the water supply lines and water drain lines. An independent claim is included for the sanitary fitting system using the connector block.

DE 30 09 599 A1 discloses opposite end cold and hot water intake holes, and a front mounting hole for these to discharge separately into a joint unit, are provided in a base unit in a connecting box for sanitary tap fittings, sited under rendering. It also has two additional, symmetrically sited, mounting apertures (7,8) on the front side, and two symmetrical valve seats (11,18), in the connecting ducts (10,13,17,19) between the intake holes (5,6) and central mounting hole (9), facing the base unit's (2) front, and each coaxial with one of the outer mounting holes. This permits connection of a wide variety of different tap assemblies.

WO00/34698 discloses a valve housing (1) has one or more inlets (4), e.g. for hot and cold water. There is provided in the proximity of one such inlet a bore (5) which includes widened parts and which accommodates a sleeve-shaped cut-off valve (2) that has an end surface (2a) which can be brought into sealing contact with a seating surface (1a) in the valve housing. A check valve (3) is accommodated in the valve body (2) concentrically therewith. The cut-off valve can be screwed against the set (1a) such as to cut-off the delivery of fluid, therewith enabling servicing of the valve and/or exchange of other components in the valve housing to be carried out.

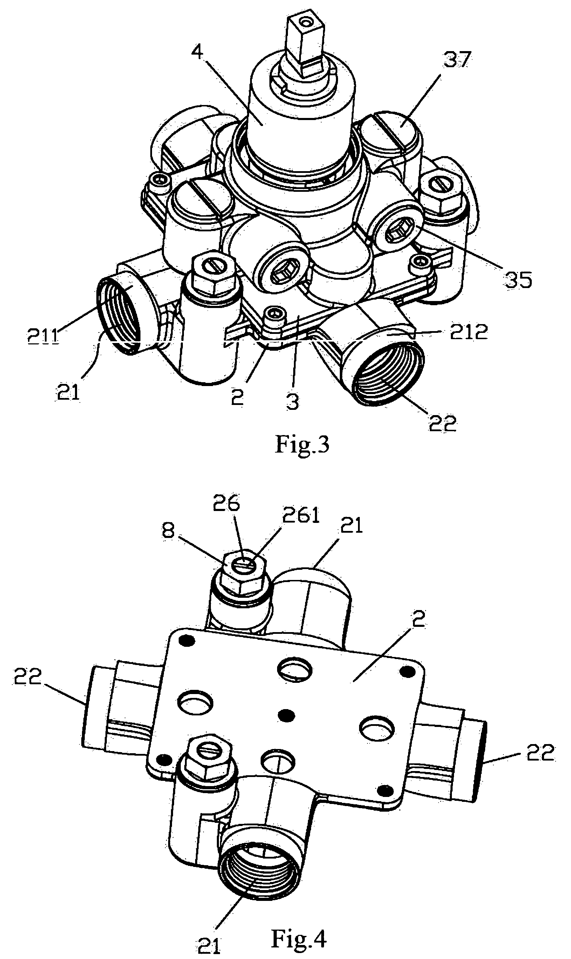

BE 413966 discloses an air-cooled radial-cylinder aircraft engine in which the cylinder heads project slightly beyond the cowling 19, 20, the heads are formed integrally with individual streamlined hoods 35 which have detachable caps 36, and are connected to the heads by heatconducting ribs 37, 39. The caps are held by long studs 46, Fig. 4, passing from the bases 47 of the heads. The inlet and exhaust valves 14, 13 of each cylinder are operated by separate rockers 27, 28, pivoted at 31, and each pair is reciprocated by a double U-shaped rocker 29 actuated by a push rod 32. Each inlet passage 15 is formed with a stream-lined partition 33 through which the corresponding push-rod and valve guide pass. An annular exhaust pipe 18 has outstanding brunches 17 which are connected to bosses 41 on the exhaust passages by studs 42.

US 2006/0207664 A1 discloses a water valve assembly for bathroom faucets, comprising a water passage, an accommodating cavity and a flow diverting unit, whereby the flow pathway within a faucet can be adjusted. The accommodating cavity has a first cavity portion and a second cavity portion, the second cavity portion being connected to the water passage and provided with two water holes respectively connected to two water outlets. The flow diverting unit, being capable of rotating within the accommodating cavity, has a first end rotatably sealing the first cavity portion and a second end coupled to the outer body of the faucet by a limiting member, whereby the rotation of the flow diverting unit with respect to the accommodating cavity will be limited, and whereby a blocking member of the second end of the flow diverting unit can seal either of the water holes.

US 2013/0312856 A1 discloses a mixing valve assembly including a valve cartridge is supported by a valve body housing within a shower wall. The valve cartridge includes a temperature sensor in thermal communication with water provided to an outlet port of the valve body. A temperature display is configured to provide a visual indication of water temperature detected by the temperature sensor.

### Summary of the Invention

In order to overcome the disadvantages of the prior art, the present invention provides an embedded faucet assembly, for which the faucet can be maintained and replaced conveniently and don't need to switching off the main valve of the water source during maintaining and replacing the faucets, and also solves the problem of the hot and cold outlet passage for the embedded faucets.

The technical solution adopted for solving the technical problem by this present invention is as follows:
An embedded faucet assembly comprises a housing, wherein the bottom of the housing is provided with a mounting foot, a lower main body is provided within the housing, a water inlet and a water outlet on the lower main body protrude from the side wall of the housing, an upper main body is mounted on the lower main body, and the top of the upper main body is connected with a constant pressure valve core, the constant pressure valve core protrudes from the housing and is connected with a switch handle, the housing is also provided with a panel clinging to a wall surface and used for shielding internal pieces of the housing; the lower main body is provided with an inlet passage and an outlet passage, the inlet passage is provided a water baffle comprising a standing plate, the bottom of the standing plate buckles inwards first and then downwards to form a buckling abdicating part; a side position of the inlet passage is provided with a stream guidance cavity with an opening on the top, the stream guidance cavity comprise an upper stream guidance cavity and a lower stream guidance cavity, the upper stream guidance cavity communicates with the outlet passage, and the lower stream guidance cavity is connected with the inlet passage through the buckling abdicating part, a baffle is arranged between the upper stream guidance cavity and the lower flow guide chamber, and is provided with a water-through hole for communicating the upper stream guidance cavity and the lower stream guidance cavity; the top of the stream guidance cavity is connected with a push rod by means of a threaded connection, the bottom of the push rod is arranged with a sealing plug which can seal the water-through hole while moving down along with the push rod.

As an improvement to the afore technical solution, the assembly comprises an inlet conduit and an outlet conduit communicating with the inlet passage and the outlet passage respectively which is provided on the upper main body, a gasbag holding cavity with an opening end is provided on the upper main body, the inlet conduit communicates with an end opposite to the opening end, a safety gasbag is arranged in the gasbag holding cavity, and the safety gasbag is a hollow cylinder, and comprises fixing rings at both end and a R inner concavity fixed between two fixing rings, the safety gasbag is arranged coaxial to the gasbag holding cavity, the opening end of the gasbag holding cavity is connected with a first end plug, the first end plug seals the opening end by coordinating with a seal ring.

As a furthermore improvement to the afore technical solution, a plurality of reinforcing ribs are distributed uniformly on the R inner concavity of the safety gasbag, and both ends of the reinforcing ribs are connected to the fixing rings respectively.

Further, a cavity for shelving a filter element is arranged on the passage of the inlet conduit, the top of the cavity for shelving the filter element is sealed by a second end plug cooperating with a seal ring, a strainer is mounted within the cavity for shelving the filter element.

As a preferred mode, the mounting foot comprises a projecting boss, wherein a longitudinally extended connecting hole is formed on the boss, side walls of the boss are arranged with a via hole running through the connecting hole, a blocking pillar is inserted into the connecting hole, and the top of the blocking pillar is formed with a second mounting foot by horizontal expansion, the second mounting foot is provided with a mounting hole for a screw, the blocking pillar is formed with a plurality of clamp slots in a direction perpendicular to the hole depth of the via holes, the blocking slots are arranged on the blocking pillars longitudinally; and also comprise a plugboard, wherein a slotting is provided in the front end of the plugboard, a backoff is arranged at the front end of the wall of the slotting, and the backoff buckles into the blocking slots of the blocking pillars after the plugboard is inserted into the via holes.

Further, the boss is formed with a plurality of abdicating gaps which abdicate both brims of the slotting while the slotting is hit to open, and the abdicating gaps communicates with the connecting holes.

As a preferred mode, the panel comprises a plastic panel, on which an abdicating hole for the valve core is formed, and the plastic panel is covered with a decoration panel 63 comprising a center hole corresponding to the position of the abdicating hole for the valve core, the wall of the center hole is provided with raised lines; and also comprises an identification panel covered with a marking using a laminating technology within a mould, the identification panel is formed with a center abdicating hole, the bottom end surface of the identification panel is formed with an evaginated loop, wherein the outer diameter of the bottom of the evaginated loop is greater than that of the top of the evaginated loop and thus a back-off structure fastened to the lower edge of the center hole is formed. After the identification panel is pressed into the centre hole of the decoration panel, the back-off structure is fastened along the lower hole brim of the centre hole, and the evaginated loop is formed with a plurality of gaps adapted to the raised lines, the bottom end surface of the identification panel is also formed with a clamp slot structure coaxial to the center abdicating holes, an O-shaped ring is arranged in the clamp slot structure.

Further, a bottom end surface of the identification panel is formed with an inner convex ring, the internal circle wall of the inner convex ring forms a plurality of bulging teeth distributing circularly and uniformly, where the bulging teeth, the inner convex ring and the identification panel constitute the clamp slot structure together.

Further, the push rod is connected with the stream guidance cavity through an adapting piece, wherein the adapting piece is provided with an internal and an external thread which is connected with the push rod and the stream guidance cavity respectively, and the adapting piece is formed with a through-hole coaxial to the internal thread, the top of the push rod sticks into or runs through the through-hole, and a screwdriver slot is arranged on the top of the push rod; and the adapting piece also comprises a convex ring resisting the opening end of the stream guidance cavity, a shelving slot for a seal ring is arranged under the convex ring, and the seal ring in the shelving slot forms a seal between the adapting piece and the stream guidance cavity.

As a preferred mode, fixed seal rings are arranged between the inlet passage and outlet passage of the lower main body and the housing, and which are formed with an inner circular hole which abdicates the corresponding inlet passage and the outlet passage, the inner circular hole is provided with a R inward flange with the effect of fastening; the periphery walls of the fixed seal rings are arranged with an outward flange, and the housing is provide with an internal slot adapted to the outward flange.

The advantageous effects are as follows: for the invention in the above structure, the maintaining and replacing of the faucets can be completed only needing to twist and spin the push rod to drive it move down bring along the sealing plug under the effect of the thread wherein the sealing plug moving down will block off the limber holes in the baffle, thereby separating the stream passage between the upper and lower guidance stream cavities, and the flow is unable to flow into the outlet passage from the inlet passage, thus the maintaining and replacing of the faucets can be convenient. Comparing to the situation of needing to turn off the main valve for the water source in a conventional technology, in the present invention, the appearance replacing of the valve core or the faucet can not affect the normal use of the other shower pieces, can not affect the normal water use of the whole residential building, and the maintaining and replacing are greatly facilitated, and the cost of maintaining is reduced. While connecting the constant pressure valve cores through the valve core seat and ensuring the cool water pressure identical to the hot water pressure by means of constant pressure valve cores, the constancy and invariability of the water temperature of the effluent is realized and the situation of hot and cold is avoided. And the products of the present invention are in a simple and compact structure, and it is convenient for installation and simple for implementation.

### Brief Description of the Drawings

Fig. 1 is a structure diagram of the present invention;
Fig. 2 is a structure diagram of the present invention where the decoration panel and the identification panel are concealed;
Fig. 3 is a fitting schematic diagram of the lower and upper main bodies and the constant pressure valve core of the present invention;
Fig. 4 is a structure diagram of the lower main body of the present invention;
Fig. 5 is an exploded schematic diagram of Fig. 3;
Fig. 6 is a structure diagram of the lower main body of the present invention at another angle;
Fig. 7 is a front projection drawing of the lower main body of the present invention;
Fig. 8 to Fig. 11 are the schematic cross-sectional views along the cross sections A-A', B-B', C-C' and D-D' in Fig. 7;
Fig 12 is a structure diagram of the push rod of the present invention;
Fig 13 is a structure diagram of the adapting piece of the present invention;
Fig 14 is a structure diagram of the upper main body of the present invention;
Fig 15 is a structure diagram of the upper main body of the present invention at another angle after concealing the first choke plug and the safety gasbag;
Fig 16 is a disassembled schematic diagram of the safety gasbag and the upper main body of the present invention;
Fig 17 is a front projection drawing of the upper main body of the present invention;
Fig 18 is a diagrammatic cross-section of the middle section E-E' after concealing the strainer in the left side;
Fig 19 is a structure diagram of the safety gasbag of the present invention;
Fig 20 is a structure diagram of the strainer in the present invention;
Fig 21 and Fig 22 are the structure diagrams of the second end plugs of the present invention;
Fig 23 is a disassembled schematic diagram of the second mounting foot and the housing;
Fig 24 is a partial enlarged drawing of F in Fig 23;
Fig 25 is a structure diagram of the second mounting foot of the present invention;
Fig 26 is a structure diagram of the plugboard in the present invention;
Fig 27 is a disassembled schematic diagram of the panel of the present invention;
Fig 28 is a structure diagram of the decoration panel in the present invention;
Fig 29 ~Fig 30 are the structure diagrams of the identification panels in the present invention;
Fig 31 is a disassembled schematic diagram of the fixed sealing ring and the housing.

### Detailed Description

The present invention may be further described with reference to the drawings and the examples.

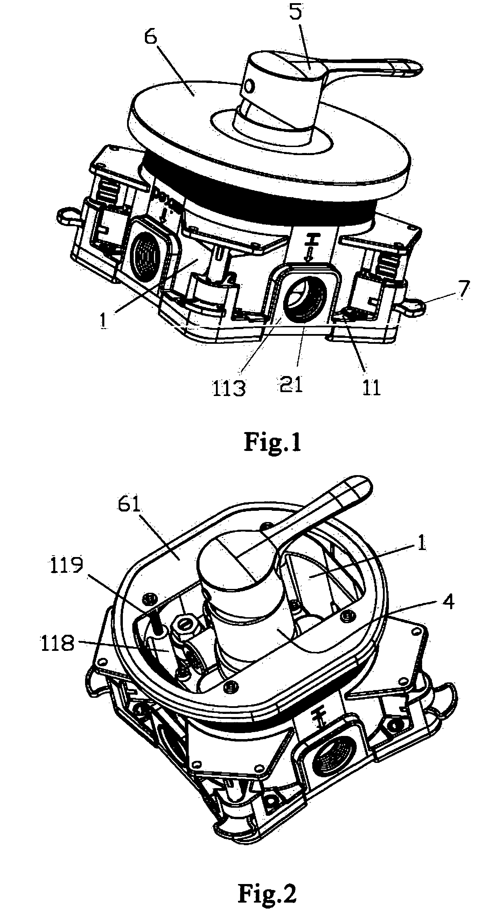

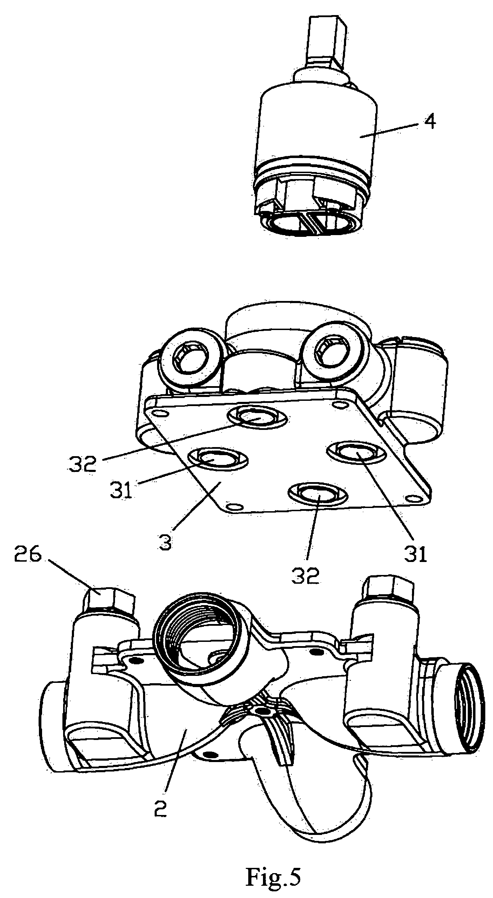

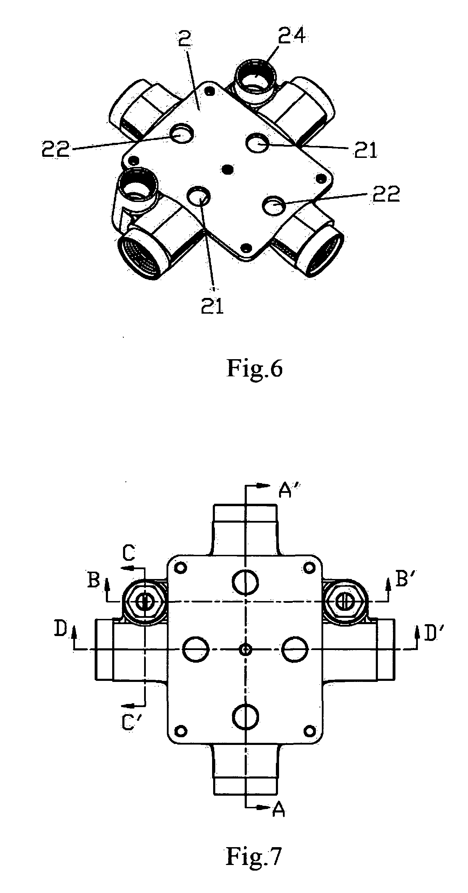

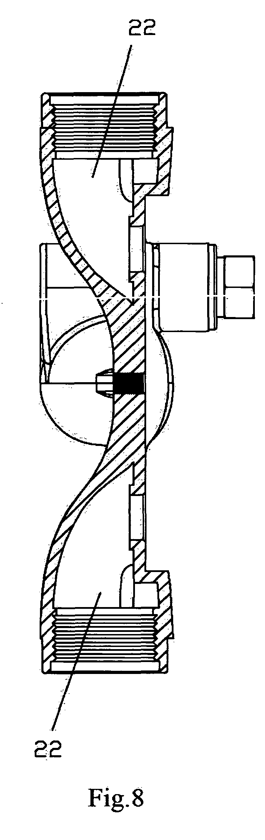

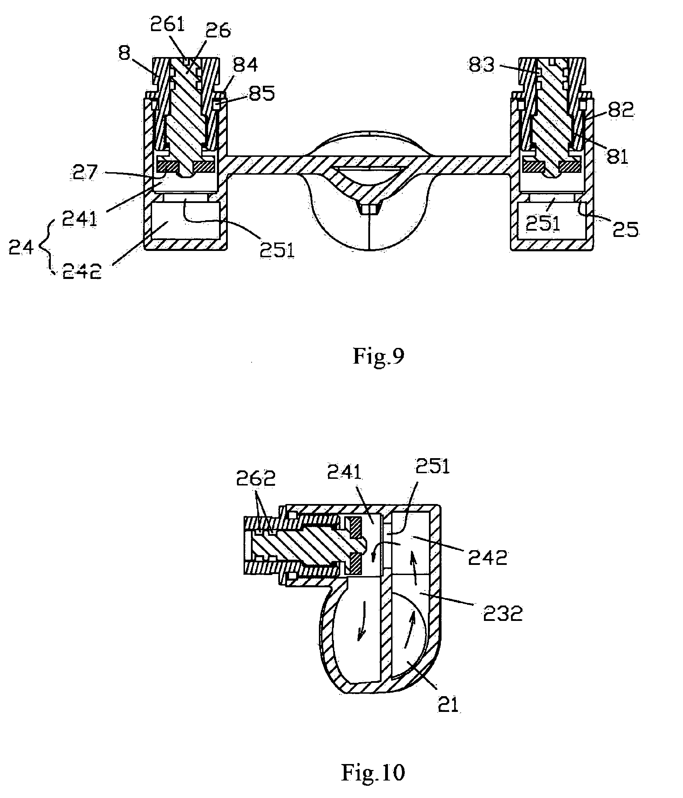

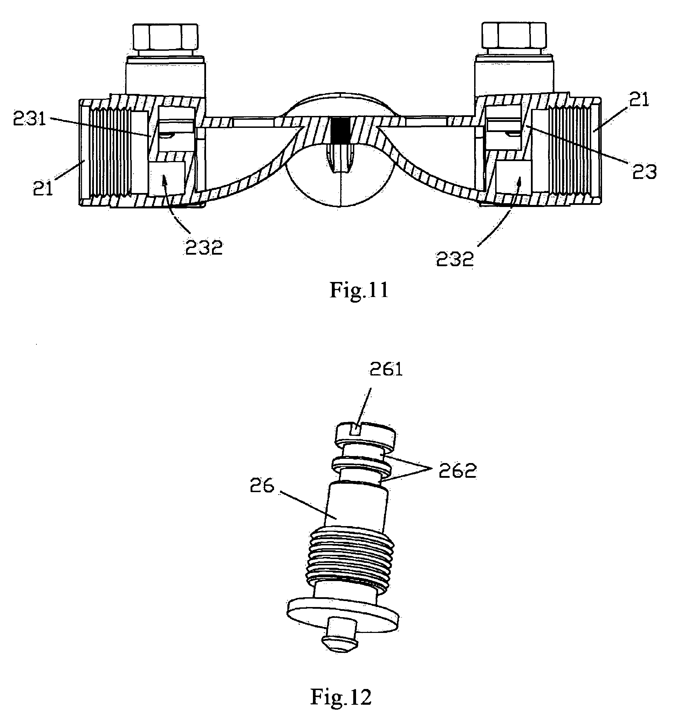

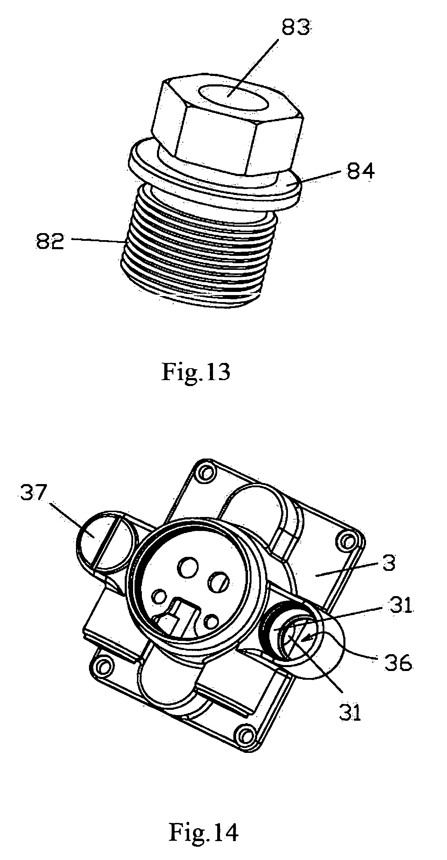

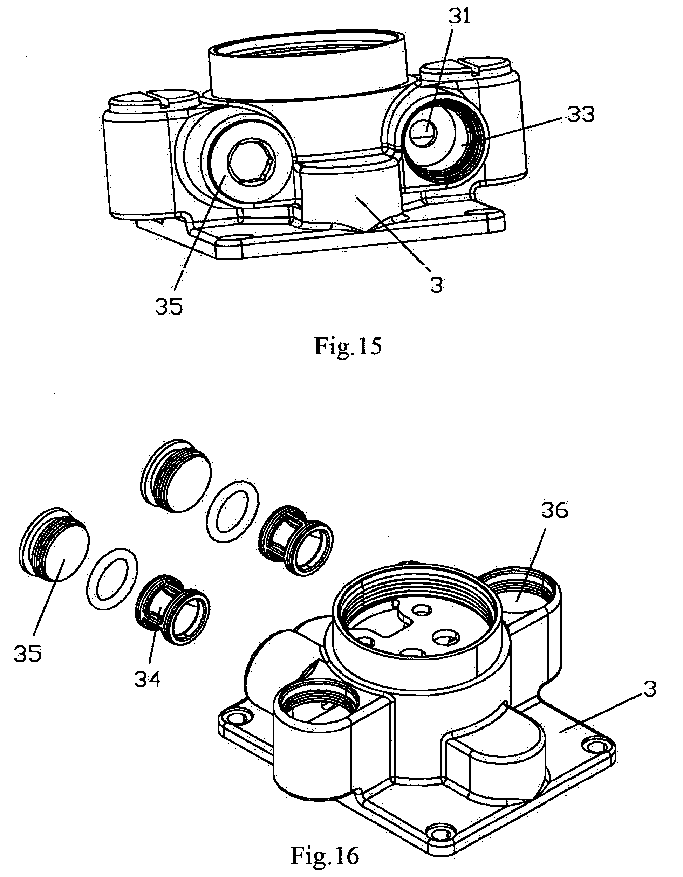

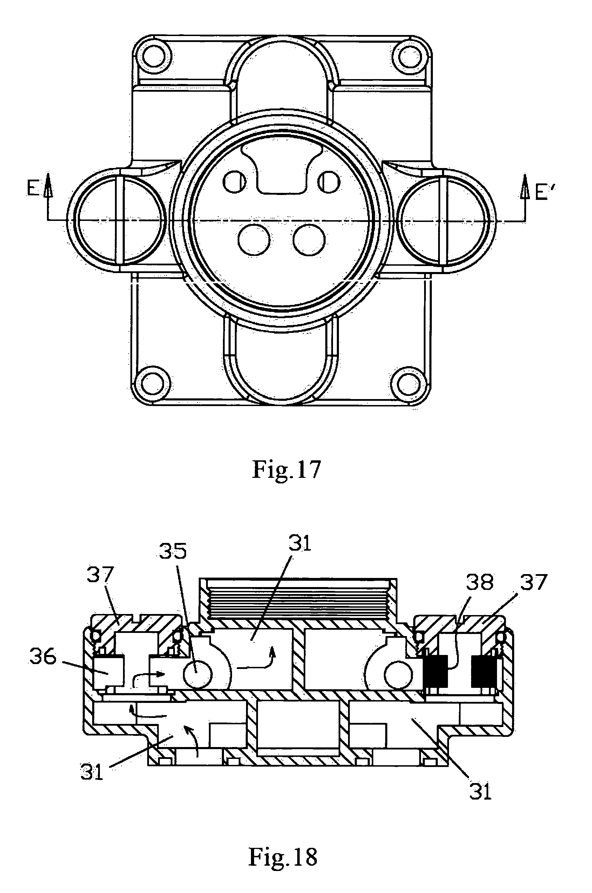

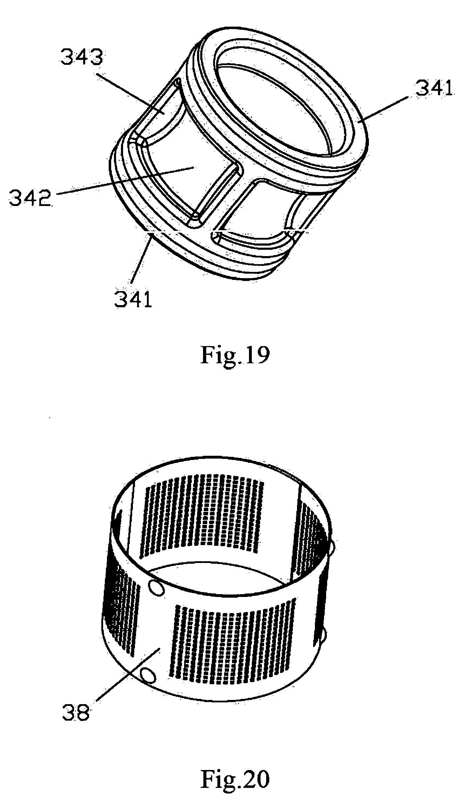

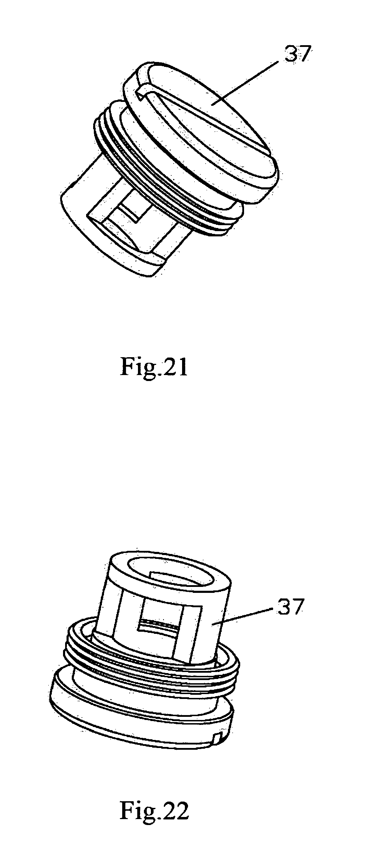

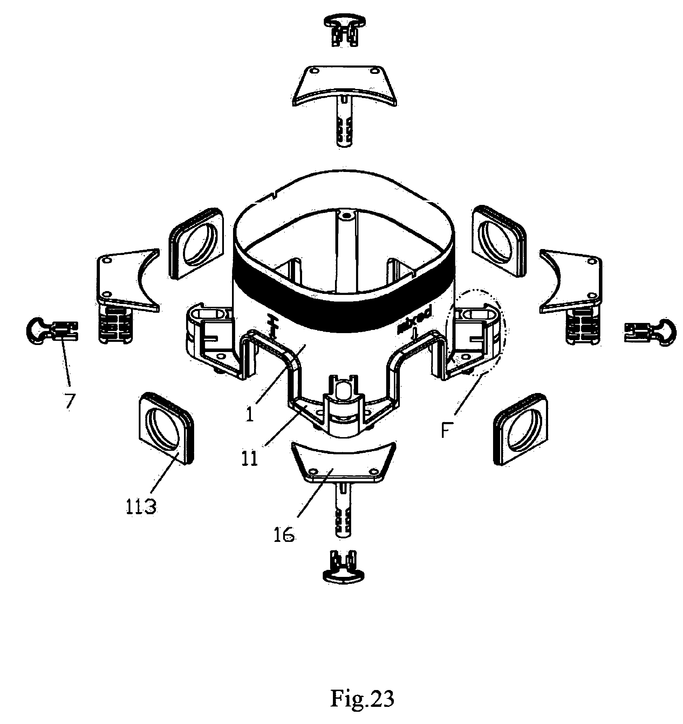

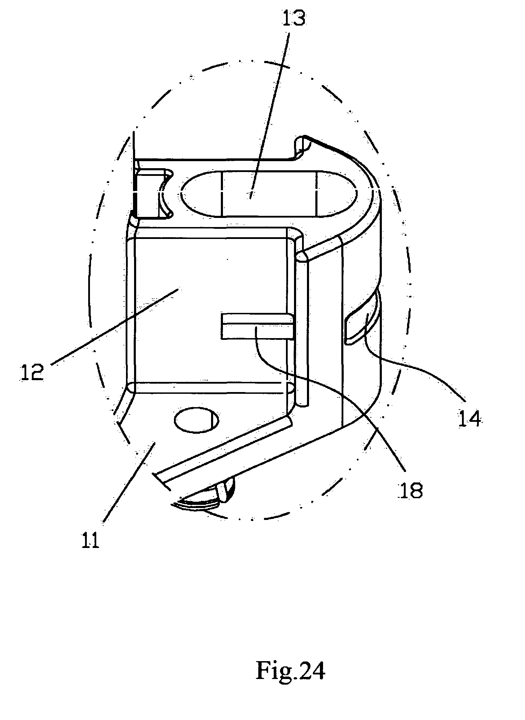

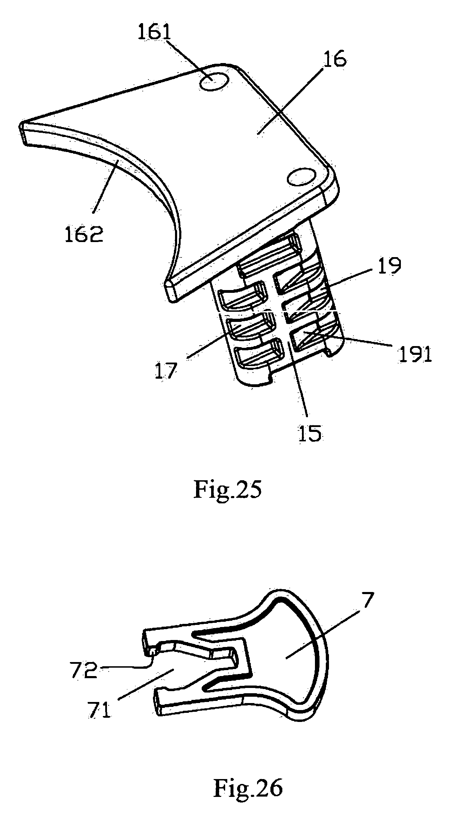

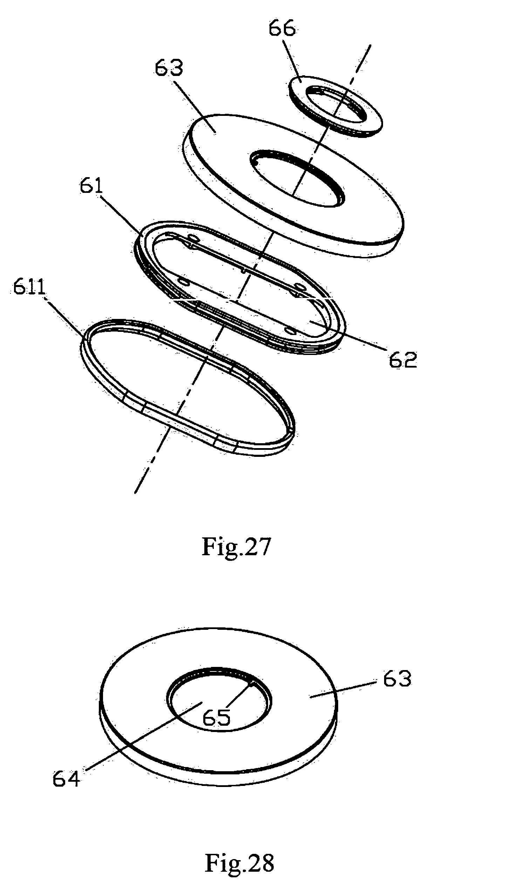

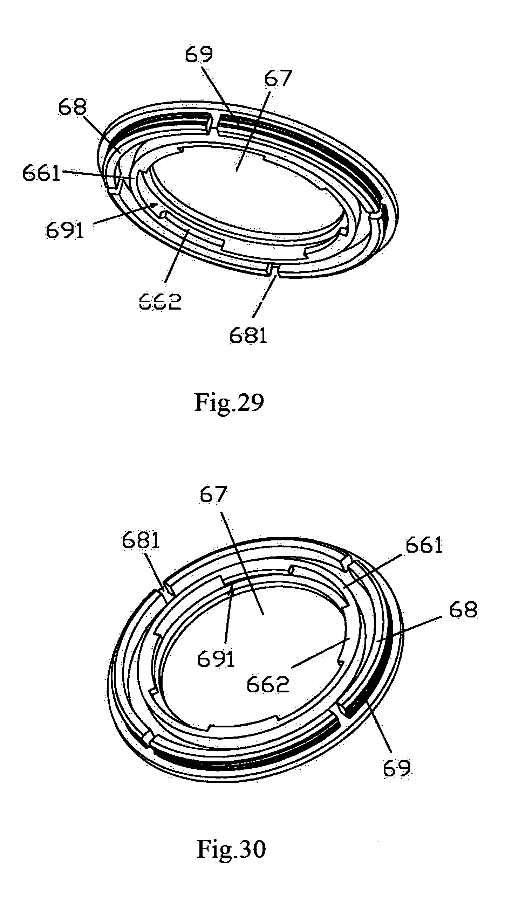

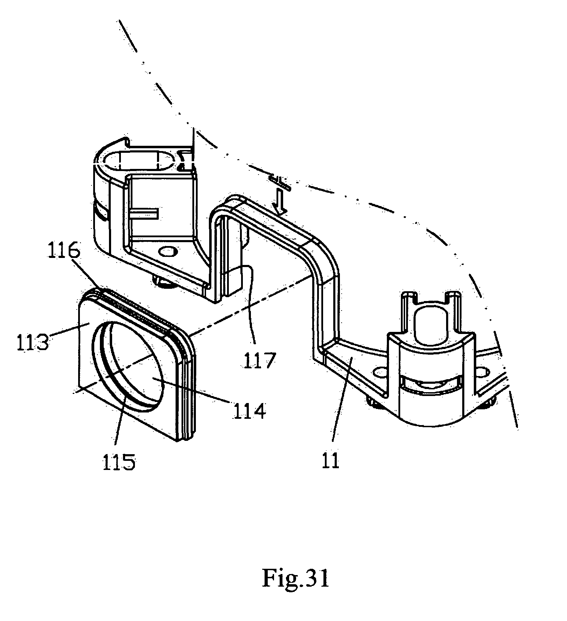

Referring to Fig. 1 to Fig. 31, an embedded faucet assembly comprises a housing 1 with mounting feet 11 arranged at its bottom. The housing 1 is arranged with a lower main body 2, wherein a water inlet 211 and a water outlet 212 on the lower main body stretch out of side walls of the housing 1, the lower main body 2 is mounted with an upper main body 3 which is fixed on the lower main body 2 through a threaded connection, and the upper main body is connected with a constant pressure valve core 4 at its top, wherein the constant pressure valve core 4 is used to assure the same hydraulic pressure of cold water and hot water in the embedded faucet so that the water temperature is constant and the situation that water is sometimes hot and sometimes cold can be avoided Because the constant pressure valve core 4 is well known in the art, a further description thereof is not included herein. The constant pressure valve core 4 stretches out of the housing 1 and is connected with a switch handle 5. The housing 1 is mounted with the panel 6 clinging to a wall surface and used for shielding pieces within the housing 1. The lower main body 2 is provided with an inlet passage 21 and an outlet passage 22, wherein the inlet passage 21 is provided with a water baffle 23, the water baffle 23 comprises a standing plate 231, and the bottom end of the standing plate 231 buckles inwards first and then downwards to form a buckling abdicating part 232. The side position of the inlet passage 21 is provided with a flow guide chamber 24 with an open top end, which comprises an upper flow guide chamber 241 and a lower flow guide chamber 242, wherein the upper flow guide chamber 241 is connected with the outlet passage 22, the lower flow guide chamber 242 is communicated with the inlet passage 21 through the buckling abdicating part 232. A baffle 25 is arranged between the upper flow guide chamber 241 and the lower flow guide chamber 242, and provided with water-through holes 251 for communicating the upper flow guide chamber 241 and the lower flow guide chamber 242. And the flow guide chamber 24 is threadedly connected with a push rod 26 at its top. At the bottom of the push rod 26 is arranged with a sealing plug 27 which can seal the water-through hole 251 while moving down along with the push rod 26.

With the above structure of the invention, when maintaining and replacing the faucets is required, the maintenance personnel only need to screw the push rod, to drive the sealing plug move down with the effect of the thread, and the sealing plug moving down will block off the water-through hole 251 in the baffle 25, thereby separate the flow passage between the upper and the lower flow guide chamber 241, 242, and the flow is unable to flow into the outlet passage from the inlet passage, thus maintaining and replacing the faucets can be convenient. Comparing to the situation of needing to turn off the master valve for the water source in conventional technology, in the present invention, replacing the valve core or the faucet appearance may not affect the normal use of the other shower pieces, may not affect the normal water use of the whole residential building, and the maintaining and replacing are greatly facilitated, and the cost of maintaining is reduced.

In a preferred example, the push rod 26 is preferably connected with the flow guide chamber 24 through an adapting piece 8, wherein the adapting piece 8 is provided with an internal and an external thread 81 and 82 which are connected with the push rod 26 and the flow guide chamber 24, respectively. Through-holes 83 coaxial to the internal thread 81 are formed on the adapting piece 8. The upper portion of the push rod 26 sticks into or runs through the through-holes 83. A screwdriver slot 261 is arranged on the top of the push rod 26, and two seal ring inner groove 262 for holding the seal ring are provided on the push rod 26 located in the through hole 83. And the adapting piece 8 is also formed with a convex ring thereon which abuts against the open end of the flow guide chamber 24. The convex ring 84 is formed with a shelving slot 85 for the seal ring at its underneath, and the seal rings in the shelving slots 85 form seal between the adapting pieces 8 and the flow guide chambers 24. The arrangement of the adapting piece 8 is in favor of the assembly of the push rod 26, when assembled. The push rod 26 can be first pre-assembled with the adapting piece 8 to form a pre-assembly member, the pre-assembly member is then mounted in the flow guide chamber 24, and the assembly is convenient. Meanwhile, the arrangement of the adapting piece 8 is in favor of forming a seal between the chamber wall contact surfaces, the mating of the seal ring inner groove 262 and several sealing rings within the shelving slot 85 for the sealing rings may assure to form the good seal between the push rod 26 and the adapting pieces 8, and between the adapting pieces 8 and the flow guide chamber 24, accomplishes the sealing property of the push rod during the up and down movement of the push rod 26, and ensures that the up and down movement will not affect the sealing property of the whole structure.

The top end of the adaptive piece 8 is hexagon bolt head to easily install the adapting pieces 8 into the flow guide chamber 24.

In this example, an inlet conduit 31 and an outlet conduit 32 connected with the inlet passage 21 and the outlet passage 22 respectively are formed on the main body 3. A gasbag holding chamber 33 with an open end is provided on the upper main body 3, the other end of the gasbag holding chamber 33 opposite to the open end is communicated with the inlet conduit 31. A safety gasbag 34 is arranged in the gasbag holding cavity 33 which is a hollow cylinder, and comprises fixing ring 341 at both end and the R inner concavity 342 fixed between two fixing rings 341, the safety gasbag 34 is arranged at a same axis with the gasbag holding cavity 33, the opening end of the gasbag holding cavity 33 is connected with the first end plug 35, the first end plug 35 seals the opening end by coordinating with a seal ring. The arrangement of the safety gasbag 34 allows that the water enters into the safety gasbag 34 before water enters into the core of constant pressure core as the control water main body of the faucets. Subjecting to the water pressure, the R inner concavity 342 of the safety gasbag 34 may swell, and result increase of volume of the safety gasbag 34 and exerts an effect of relieving the pressure, such as the pressure exerting on the constant pressure valve core 4, and protects the constant pressure valve core 4, meanwhile decreases the noise of the flow during relieving the pressure. As a preferred mode, a plurality of reinforcing ribs are distributed uniformly on the R inner concavity 342 of the safety gasbag 34, both ends of the reinforcing ribs are connected to the fixing rings 341, the arrangement of the reinforcing ribs 343 increases the strength of the R inner concave surface 342, meanwhile ensure that the R inner concave surface 342 can be reset after deformation.

In this example, a cavity 36 for shelving a filter element is arranged on the passage of the inlet conduit 31, of which the top is sealed by a second end plug 37 cooperating with a seal ring, a strainer 38 is mounted in the cavity 36 for shelving the filter element. The provision of the strainer 38 can avoid that the impurities block the sensitive positions such as the constant pressure valve cores 4 in the flow.

In this example, it is preferred that, the mounting feet 11 comprise a projecting boss 12, wherein a longitudinally extended connecting hole 13 is formed on the boss 12, side wall of the boss is arranged with a via holes 14 running through the connecting holes 13, a clip pillar 15 is inserted into the connecting holes 13, and the top of the clip pillar 15 is formed with a second mounting feet 16 by horizontal expansion, the second mounting feet 16 are provided a plurality of mounting holes 161 for a screw, the clip pillars 15 are formed with a plurality of clamp slots 17 in a direction perpendicular to the hole depth of the via holes 14, the clamp slots 17 may be several and arranged on the clip pillars 15 longitudinally. A plugboard 7 is also comprised, of which the front end is arranged with a slotting (71), and at the position of the front port of the slotting (71) is formed a backoffs 72, wherein the backoffs 72 buckles into the clamp slots 17 of the clip pillars 15 after the plugboard 7 is inserted into the via holes 14. By means of inserting the blocking pillars 15 in the connecting holes 13 on the boss 12, top of the blocking pillars 15 will extend inward and form the second mounting feet 16. The insertion of the via holes 14 and then backing-off 72 in the slot 17 on the blocking pillars 15 to allow installing the second mounting feet 16, allow the installation of the embedded faucets on the hollow wall body. Arranging slots 17 longitudinally allows to adjust the particular position of the second mounting feet relative to the housing 1 according to the size and the installation demands of the hollow wall body, and facilitates the installation of the embedded faucets on the wall body greatly.

It is preferred that, the boss 12 is formed with a plurality of abdicating gaps 18 abdicating both brims of the slot of the slotting (71) while the slotting (71) are opened, and the abdicating gaps 18 are connected with the connecting holes 13.

The abdicating gap 18 can facilitate the opening of the slot brims of the slotting, and comparing with the solution of abdicating the slotting opposite, this structure facilitates the close installation of the blocking pillars 15 and the adaptive holes and this structure is very reliable.

In this example, it is preferred that, on the blocking pillar 15, a plurality of guide slots 19 corresponding to the blocking slots 17 are provided, the slot bottom of the guide slot 19 is connected to the surface of the blocking pillar through a skew wall 191, the outline of the slotting 71 of the plugboard 7 adapts to the structure of the guide slot 19 and clings to the blocking pillars 15. The impact of the skew wall 191 on the back-off 72 exerts the function of leading the brim opening of the slotting 71 to be convenient to the pushing-in the plugboard 7 and allows the connection of the back-off 72 and the blocking slot 17. Of course, the skew wall can be arranged on the back-off 72 as the guidance wall surface, while the slotting 71 of the plugboard 7 is set as adapt to the guide slot 19 and clings to the block pillar, thus can be able to immobilize the blocking pillars 15 and avoid their waggle.

In this example, the wall surface close to the housing 1 of the second mounting feet 16 adapts to the outline of the housing 1 to form the cambered surface wall 162 which is arranged close to the housing 1, and this structure may avoid the second mounting feet waggling effectively, and the connection is very reliable.

In this example, it is preferred that, the panel 6 comprises a plastic panel 61, on the housing 1, there is a position 118 arranged for mounting a bolt, and the plastic panel is fixed to the position 118 arranged for mounting a bolt via a bolt 119; on the plastic panel 61, there is a abdicating hole 62 for the valve core and the plastic panel 61 is covered with a decoration panel 63 comprising a plurality of center holes 64 corresponding to the positions of the abdicating hole for the valve core 62. The wall of the center holes 64 is provided with raised lines 65. An identification panel 66 manufactured in a laminating technology is also comprised and covered with a marking. The identification panel 66 is formed with a center abdicating hole 67. An evaginated loop 68 is formed on the bottom end surface, wherein the outer diameter of the bottom of the evaginated loop 68 is greater than that of the top of the evaginated loop 68 and thus a back-off structure 69 is formed. After the identification panel 66 is pressed into the centre hole 64 of the decoration panel 63, the back-off structure is fastened along the lower hole brim of the centre holes 64, and the outer convex ring 68 is formed with a plurality of gaps 681 adapted to the raised lines 65, the bottom end surface of the identification panel 66 is also formed with the clamp slot structure 691 coaxial to the center abdicating holes67, an O-shaped ring is arranged in the clamp slot structure 691. Dividing the panel 6 into the decoration panel 63 and the identification panel 66 which cover on the plastic panel 61, wherein, the identification panel 66 adopting a lamination process with a marking and discarding the conventional technology of setting the identification marking using the silk-screen and a laser marking, as a result, the identification on the faucets panel shall not fade for long time use or the chemical reaction occurring in the course of making the marking results in the panel yellowing. The panel structure described by this present invention possesses the marking which will never fade, and without any damage on the surface of the product, and thus guarantee the function of decoration and identification of the faucet surface.

In this example, the bottom end surface of the identification panel 66 is formed with a plurality of inner convex rings 661, the internal circle wall of the inner convex rings 661 is formed with a plurality of bulging teeth 662 distributing circularly, wherein the bulging teeth 662, the inner convex rings 661 and the identification panel 66 constitute the clamp slot structure 691 together.

In this example, it is preferred that, a plurality of fixed seal rings 113 are arranged between the inlet passage and outlet passage 211 and 212 of the lower main body and the housing, and which comprise a plurality of inner circular holes 114, the inner circular hole 114 is provided with a R inner inward flange 115. The periphery wall of the fixed seal rings113 is arranged with the outward flange 116, and the housing is provided with a plurality of internal slots 117 adapted to the outward flanges 116. It is considered that, at the moment of turn on the embedding the faucets for water, its releasing in a twinkling under the high pressure may produce rather high noise and thus the water pipe may occur shock which may involve the lower main body 2, while installing the lower main body 2 on the fixed seal rings 113 doesn't allow the flow sound penetrating the wall body and may avoid the noise penetrating out of the tile.

The above description only may be the better modes of execution of invention, but the invention are not limited by the above examples, and any solution which achieves the same technical effect by means of a same or similar means shall be subordinated to the claimed scope of this present invention.

## Claims

1. A faucet assembly suitable for being embedded in a wall, comprising:
a lower main body (2) provided with a water inlet (211) and a water outlet (212);
an upper main body (3) which is mounted on the lower main body (2), and the top of the upper main body (3) is connected with a constant pressure valve core (4), the constant pressure valve core (4) is connected with a switch handle (5);
the lower main body (2) is provided with an inlet passage (21) and an outlet passage (22),
**characterised in that**
the assembly comprises a housing (1), wherein mounting feet (11) are provided at the bottom of the housing;
the lower main body (2) is provided within the housing (1);
the water inlet (211) and outlet (212) of the lower main body (2) protrude from a side wall of the housing (1);
the constant pressure valve core (4) protrudes from the housing (1);
the housing (1) is also provided with a panel (6) clinging to a wall surface, when the assembly is in its mounted condition, and used for shielding internal pieces of the housing (1);
the inlet passage (21) is provided with a water baffle (23) comprising a standing plate (231), the bottom of the standing plate (231) buckles inwards first and then downwards to form a buckling abdicating part (232);
a side position of the inlet passage (21) is provided with a stream guidance cavity (24) with an opening on the top, the stream guidance cavity (24) comprises an upper stream guidance cavity (241) and a lower stream guidance cavity (242), the upper stream guidance cavity (241) communicates with the outlet passage (22), and the lower stream guidance cavity (242) communicates with the inlet passage (21) through the buckling abdicating part (232);
a further baffle (25) is arranged between the upper stream guidance cavity (241) and the lower stream guidance cavity (242), and is provided with a plurality of water-through holes (251) for communicating the upper stream guidance cavity (241) and the lower stream guidance cavity (242);
the top of the stream guidance cavity (24) is connected with a push rod (26) by means of a threaded connection, the bottom of the push rod (26) is provided with a sealing plug (27) which can seal the water- through holes (251) by moving down along with the push rod (26).

2. The faucet assembly of claim 1, **characterized in that** an inlet conduit (31) and an outlet conduit (32) communicating with the inlet passage (21) and the outlet passage (22) respectively are formed on the upper main body (3); a gasbag holding cavity (33) with an opening end is provided on the upper main body (3), the inlet conduit (31) communicates with an end opposite to the opening end, a safety gasbag (34) is arranged in the gasbag holding cavity (33), and the safety gasbag is a hollow cylinder, and comprises fixing rings (341) at both ends and a R inner concavity (342) fixed between two fixing rings (341), the safety gasbag (34) is arranged around a same axis with the gasbag holding cavity (33), the opening end of the gasbag holding cavity (33) is connected with a first end plug (35), the first end plug (35) seals the opening end by coordinating with a seal ring.

3. The faucet assembly of claim 2, **characterized in that** a plurality of reinforcing ribs (343) are distributed uniformly on the R inner concavity (342) of the safety gasbag (34), both ends of the reinforcing ribs are connected to the fixing rings (341).

4. The faucet assembly of claim 3, **characterized in that** a cavity for shelving a filter element (36) is arranged on the passage of the inlet conduit (31), of which the top is sealed by a second end plug (37) cooperating with a seal ring, and within which a strainer (38) is mounted.

5. The faucet assembly of claim 1, **characterized in that** the mounting fount (11) comprise a projecting boss (12), a longitudinally extended connecting hole (13) is formed on the boss (12), side walls of the boss (12) are arranged with a via hole (14) running through the connecting hole (13), a blocking pillar (15) is inserted into the connecting hole (13), and a second mounting foot (16) is formed on the top of the blocking pillar (15) by horizontal expansion, the second mounting foot (16) is provided with a mounting hole (161) for a screw, a plurality of blocking slots (17) are formed in the blocking pillar (15) in a direction perpendicular to the hole depth of the via holes (14), the blocking slots (17) are arranged on the blocking pillars (15) longitudinally; and also comprise a plugboard (7), wherein a slotting (71) is provided in the front end of the plugboard (7), a backoff (72) is arranged at the front end of the wall of the slotting (71), and the backoff (72) buckles into the blocking slots (17) of the blocking pillars (15) after the plugboard (7) is inserted into the via holes (14).

6. The faucet assembly of claim 5, **characterized in that** a plurality of abdicating gaps (18) abdicating both brims of the slot of the slotting (71) while the slotting (71) is hit to open are formed on the boss (13), and the abdicating gaps (18) communicates with the connecting holes (13).

7. The faucet assembly of claim 5, **characterized in that** the panel (6) comprises a plastic panel (61), on which abdicating holes (62) for the valve core are formed, the plastic panel (61) is covered with a decoration panel (63), the decoration panel (63) comprises a plurality of center holes (64) corresponding to the positions of the abdicating holes (62) for the valve core, the walls of the center holes (64) are provided with a plurality of raised lines (65); and also comprises an identification panel (66) manufactured in a laminating technology and covered with a marking, the identification panel (66) is formed with a plurality of center abdicating holes (67), a plurality of evaginated loops (68) are formed on the bottom end surface of the identification panel (66), wherein the outer diameter of the bottom of the evaginated loops (68) is greater than that of the top of the evaginated loops (68) and thus a back-off structure (69) is formed, after the identification panel (66) is pressed into the centre holes (64) of the decoration panel (63), the back-off structure (69) is fastened along the lower hole brim of the centre holes (64), and the evaginated loops (68) are formed with a plurality of gaps (681) adapted to the raised lines (65), the bottom end surface of the identification panel (66) is also formed with a blocking slot structure (691) coaxial to the center abdicating holes (67), an O-shaped ring is arranged in the blocking slot structure (691).

8. The faucet assembly of claim 7, **characterized in that**, a bottom end surface of the identification panel (66) is formed with an inner convex ring (661), the internal circle wall of the inner convex ring (661) is formed with a pluralité of bulging teeth (662) distributing circularly and uniformly, wherein the bulging teeth (662), the inner convex ring (661) and the identification panel (66) constitute the blocking slot structure (691) together.

9. The faucet assembly of claim 1, **characterized in that** the push rod (26) is connected with the stream guidance cavity (24) through an adapting piece (8), wherein the adapting piece (8) is provided with an internal and an external thread (81, 82) which is connected with the push rod (26) and the stream guidance cavity (24) respectively, and the adapting piece (8) is formed with a through-hole (83) coaxial to the internal thread (81), the top of the push rod (26) sticks into or runs through the through-hole (83), and a screwdriver slot (261) is arranged on the top of the push rod (26); and the adapting piece (8) also comprises a convex ring (84) resisting the opening end of the stream guidance cavity (24), a shelving slot (85) for a seal ring is arranged under the convex ring (84), and the seal ring in the shelving slot (85) form a seal between the adapting piece (8) and the stream guidance cavity (24).

10. The faucet assembly of claim 1, **characterized in that** fixed seal rings (113) are arranged between the inlet passage and outlet passage (211, 212) of the lower main body (2) and the housing (1), and the fixed seal rings (113) comprise an inner circular hole (114) abdicating the corresponding inlet passage and outlet passage (211, 212), the inner circular hole (114) is provided with a R inward flange (115); the periphery walls of the fixed seal rings (113) are arranged with an outward flanges (116), and the housing (1) is provide with an internal slot (117) adapted to the outward flange (116).

## Patentansprüche

1. Wasserhahnanordnung, die zum Versenken in einer Wand geeignet ist, mit:
einem unteren Hauptkörper (2), der mit einem Wassereinlass (211) und einem Wasserauslass (212) versehen ist;
einem oberen Hauptkörper (3), der auf dem unteren Hauptkörper (2) montiert ist, wobei die Oberseite des oberen Hauptkörpers (3) mit einem Konstantdruck-Ventileinsatz (4) verbunden ist, und wobei der Konstantdruck-Ventileinsatz (4) mit einem Wechselgriff (5) verbunden ist;
wobei der untere Hauptkörper (2) mit einem Einlassdurchlass (21) und einem Auslassdurchlass (22) versehen ist,
**dadurch gekennzeichnet, dass**
die Anordnung ein Gehäuse (1) aufweist, wobei Montagefüße (11) an dem Boden des Gehäuses vorgesehen sind;
der untere Hauptkörper (2) in dem Gehäuse (1) vorgesehen ist;
der Wassereinlass (211) und Wasserauslass (212) des unteren Hauptkörpers (2) von einer Seitenwand des Gehäuses (1) hervorstehen;
der Konstantdruck-Ventileinsatz (4) aus dem Gehäuse (1) hervorsteht;
das Gehäuse (1) ferner mit einer Platte (6) versehen ist, die an einer Wandfläche haftet, wenn die Anordnung im montierten Zustand ist, und die zum Abschirmen interner Komponenten des Gehäuses (1) dient;
der Einlassdurchlass (21) mit einem Wasserleitelement (23) versehen ist, das eine stehende Platte (231) aufweist, wobei die Unterseite der stehenden Platte (231) zuerst nach innen und dann nach außen geknickt ist, um einknickendes abdizierendes Teil (232) zu bilden;
eine Seitenposition des Einlassdurchlasses (21) mit einer Strömungsführungsaussparung (24) mit einer Öffnung an der Oberseite versehen ist, wobei die Strömungsführungsaussparung (24) eine obere Strömungsführungsaussparung (241) und eine untere Strömungsführungsaussparung (242) aufweist, wobei die obere Strömungsführungsaussparung (241) mit dem Auslassdurchlass (22) in Verbindung steht, und die untere Strömungsführungsaussparung (242) mit dem Einlassdurchlass (21) über das abknickende abdizierende Teil (232) in Verbindung steht;
ein weiteres Leitelement (25) zwischen der oberen Strömungsführungsaussparung (241) und der unteren Strömungsführungsaussparung (242) angeordnet ist und mit mehreren Wasserdurchgangsöffnungen (241) zum Verbinden der oberen Strömungsführungsaussparung (241) und der unteren Strömungsführungsaussparung (242) versehen ist;
die Oberseite der Strömungsführungsaussparung (24) mit einer Schubstange (26) mittels einer Schraubverbindung verbunden ist, die Unterseite der Schubstange (20) mit einem Verschlussstopfen (27) versehen ist, der die Wasserdurchgangsöffnungen (251) durch Abwärtsbewegung entlang der Schubstange (26) abdichten kann.

2. Wasserhahnanordnung nach Anspruch 1, **dadurch gekennzeichnet, dass** eine Einlassleitung (31) und eine Auslassleitung (32), die entsprechend mit dem Einlassdurchlass (21) und dem Auslassdurchlass (22) in Verbindung sind, an dem oberen Hauptkörper (3) ausgebildet sind; eine Gasbehälter-Halteaussparung (33) mit einem Öffnungsende an dem oberen Hauptkörper (3) vorgesehen ist, wobei die Einlassleitung (31) mit einem Ende gegenüberliegend zu dem Öffnungsende in Verbindung steht, ein Sicherheitsgasbehälter (34) in der Gasbehälter-Halteaussparung (33) angeordnet ist und der Sicherheitsgasbehälter ein Hohlzylinder ist und Fixierringe (341) an beiden Enden und eine R-Innenwölbung (342), die zwischen zwei Fixierringen (341) befestigt ist, aufweist, wobei der Sicherheitsgasbehälter (34) um eine gleiche Achse zusammen mit der Gasbehälter-Halteaussparung (33) angeordnet ist, wobei das Öffnungsende der Gasbehälter-Halteaussparung (33) mit einem ersten Endstopfen (35) verbunden ist und wobei der erste Endstopfen (35) das Öffnungsende im Zusammenwirken mit einem Dichtungsring abdichtet.

3. Wasserhahnanordnung nach Anspruch 2, **dadurch gekennzeichnet, dass** mehrere Verstärkungsrippen (343) gleichmäßig an der R-Innenwölbung (342) des Sicherheitsglasbehälters (34) verteilt sind, wobei beide Enden der Verstärkungsrippen mit den Fixierringen (341) verbunden sind.

4. Wasserhahnanordnung nach Anspruch 3, **dadurch gekennzeichnet, dass** eine Aussparung zur Aufnahme eines Filterelements (30) an dem Durchlass der Einlassleitung (31) angeordnet ist, deren Oberseite durch einen zweiten Endstopfen (37) im Zusammenwirken mit einem Dichtungsring abgedichtet ist und in der ein Sieb (38) montiert ist.

5. Wasserhahnanordnung nach Anspruch 1, **dadurch gekennzeichnet, dass** der Montagefuß (11) einen runden Vorsprung (12) aufweist, eine sich längs erstreckende Verbindungsbohrung (13) an dem Vorsprung (12) ausgebildet ist, Seitenwände des Vorsprungs (12) mit einem Durchgangsloch (14) versehen sind, das durch die Verbindungsbohrung (13) verläuft, ein blockierender Holm (15) in die Verbindungsbohrung (13) eingeführt ist, und ein zweiter Montagefuß (16) auf der Oberseite des blockierenden Holmes (15) durch horizontale Aufweitung ausgebildet ist, der zweite Montagefuß (16) mit einer Befestigungsbohrung (161) für eine Schraube versehen ist, mehrere blockierende Einschnitte (17) in dem blockierenden Holm (15) in eine Richtung senkrecht zur Tiefe der Bohrung der Durchgangslöcher (14) ausgebildet sind, die blockierenden Einschnitte (17) in den blockierenden Holmen (15) in Längsrichtung angeordnet sind; und dass er ferner eine Stecktafel (7) aufweist, wobei eine Schlitzanordnung (71) an dem vorderen Ende der Stecktafel (7) vorgesehen ist, ein Rückhalteelement (72) an dem vorderen Ende der Wand der Schlitzanordnung (71) angeordnet ist, und das Rückhalteelement (72) in die blockierenden Einschnitte (17) der blockierenden Holme (15) einknickt, nachdem die Stecktafel (7) in die Durchgangslöcher (14) eingeführt ist.

6. Wasserhahnanordnung nach Anspruch 5, **dadurch gekennzeichnet, dass** mehrere abdizierende Spalten (18), die beide Ränder des Einschnitts der Schlitzanordnung (71) zurücksetzen, wenn die Schlitzanordnung (71) zum Öffnen beaufschlagt wird, auf dem runden Vorsprung (13) ausgebildet sind, und wobei die abdizierenden Spalten (18) mit den Verbindungsbohrungen (13) in Verbindung stehen.

7. Wasserhahnanordnung nach Anspruch 5, **dadurch gekennzeichnet, dass** die Platte (6) eine Kunststoffplatte (61) aufweist, auf der abdizierende Bohrungen (62) für den Ventileinsatz ausgebildet sind, die Kunststoffplatte (61) mit einer Zierplatte (63) abgedeckt ist, die Zierplatte (63) mehrere zentrale Bohrungen (64) entsprechend zu den Positionen der abdizierenden Bohrungen (62) für den Ventileinsatz aufweist, die Wände der zentralen Bohrungen (64) mit mehreren erhabenen Linien (65) versehen sind; und dass sie ferner eine Identifikationsplatte (66) aufweist, die in Laminierungstechnik hergestellt und mit einer Markierung bedeckt ist, wobei die Identifikationsplatte (66) mit mehreren zentralen abdizierenden Bohrungen (67) ausgebildet ist, mehrere ausgestülpte Ösen (68) an der Bodenendfläche der Identifikationsplatte (66) ausgebildet sind, wobei der Außendurchmesser der Unterseite der ausgestülpten Ösen (68) größer ist als derjenige der Oberseite der ausgestülpten Ösen (68) und daher eine Rückhalte-Struktur (69) ausgebildet ist, nachdem die Identifikationsplatte (66) in die zentralen Bohrungen (64) der Zierplatte (63) eingedrückt ist, die Rückhalte-Struktur (69) entlang des unteren Bohrungsrands der zentralen Bohrungen (64) befestigt ist und die ausgestülpten Ösen (68) mit mehreren Spalten (681) ausgebildet sind, die an die erhabenen Linien (65) angepasst sind, die Bodenendfläche der Identifikationsplatte (66) ebenfalls mit einer blockierenden Schlitzstruktur (691) koaxial zu den zentralen abdizierenden Bohrungen (67) ausgebildet ist, und einen O-förmiger Ring in der blockierenden Schlitzstruktur (691) angeordnet ist.

8. Wasserhahnanordnung nach Anspruch 7, **dadurch gekennzeichnet, dass** eine Bodenendfläche der Identifikationsplatte (66) mit einem konvexen Innenring (661) versehen ist, die innere Ringwand des konvexen Innenrings (661) mit mehreren wulstigen Zähnen (662) die ringförmig und gleichmäßig verteilt sind, versehen ist, wobei die wulstigen Zähne (662), der konvexe Innenring (661) und die Identifikationsplatte (66) zusammen die blockierende Schlitzstruktur (691) bilden.

9. Wasserhahnanordnung nach Anspruch 1, **dadurch gekennzeichnet, dass** die Schubstange (26) mit der Strömungsführungsaussparung (24) über ein Adapterstück (8) verbunden ist, wobei das Adapterstück (8) mit einem Innengewinde und einem Außengewinde (81, 82) versehen ist, die entsprechend mit der Schubstange (26) und mit der Strömungsführungsaussparung (24) verbunden sind, und das Adapterstück (8) mit einer Durchgangsbohrung (83) koaxial zu dem Innengewinde (81) ausgebildet ist, die Oberseite der Schubstange (26) in die Durchgangsbohrung (83) hineinpasst oder in dieser verläuft, und ein Schlitz für einen Schraubenzieher (261) auf der Oberseite der Schubstange (26) angeordnet ist; und dass das Adapterstück (8) ferner einen konvexen Ring (84) aufweist, der für das obere Ende der Strömungsführungsaussparung (24) einen Widerstand bietet, ein abfallender Schlitz (85) für einen Dichtungsring unter dem konvexen Ring (84) angeordnet ist und der Dichtungsring in dem abfallenden Schlitz (85) eine Dichtung zwischen dem Adapterstück (8) und der Strömungsführungsaussparung (24) bildet.

10. Wasserhahnanordnung nach Anspruch 1, **dadurch gekennzeichnet, dass** fixierte Dichtungsringe (113) zwischen dem Einlassdurchlass und dem Auslassdurchlass (211, 212) des unteren Hauptkörpers (2) und dem Gehäuse (1) angeordnet sind, und die fixierten Dichtungsringe (113) eine innere runde Bohrung (114) aufweisen, die den entsprechenden Einlassdurchlass und Auslassdurchlass (211, 212) abdizieren, wobei die innere runde Bohrung (114) mit einem R-Innenflansch (115) versehen ist; die Randwände der fixierten Dichtungsringe (113) mit Außenflanschen (116) versehen sind, und das Gehäuse (1) mit einem inneren Einschnitt (117), der an den Außenflansch (116) angepasst ist, versehen ist.

## Revendications

1. Ensemble de robinet adapté pour être intégré dans une paroi, comprenant :
un corps principal inférieur (2) doté d'une entrée d'eau (211) et d'une sortie d'eau (212) ;
un corps principal supérieur (3) qui est monté sur le corps principal inférieur (2), et le dessus du corps principal supérieur (3) est relié avec un coeur de valve à pression constante (4), le coeur de valve à pression constante (4) est relié à un manche de commutation (5) ;
le corps principal inférieur (2) est doté d'un passage d'entrée (21) et d'un passage de sortie (22),
**caractérisé en ce que** l'ensemble comprend un logement (1), dans lequel des pieds de montage (11) sont prévus sur le fond du logement ;
le corps principal inférieur (2) est prévu dans le logement (1) ;
l'entrée d'eau (211) et la sortie d'eau (212) du corps principal inférieur (2) fait saillie sur une paroi latérale du logement (1) ;
le coeur de valve à pression constante (4) fait saillie sur le logement (1) ;
le logement (1) est aussi doté d'un panneau (6) s'accrochant sur une surface de paroi lorsque l'ensemble est dans sa condition montée, et utilisé pour protéger les pièces internes du logement (1) ;
le passage d'entrée (21) est doté d'une chicane d'eau (23) comprenant une plaque verticale (231), le fond de la plaque verticale (231) se gondole vers l'intérieur tout d'abord et vers le bas ensuite pour former une partie renonçant au gondolage (232) ;
une position latérale du passage d'entrée (21) est dotée d'une cavité de guidage de courant (24) avec une ouverture sur le dessus, la cavité de guidage de courant (24) comprend une cavité de guidage de courant supérieure (241) et une cavité de guidage de courant inférieure (242), la cavité de guidage de courant supérieure (241) communique avec le passage de sortie (22), et la cavité de guidage de courant inférieure (242) communique avec le passage d'entrée (21) par la partie renonçant au gondolage (232) ;
une chicane supplémentaire (25) est agencée entre la cavité de guidage de courant supérieure (241) et la cavité de guidage de courant inférieure (242) et est dotée d'une pluralité de trous de passage d'eau (251) pour communiquer avec la cavité de guidage de courant supérieure (241) et la cavité de guidage de courant inférieure (242) ;
le dessus de la cavité de guidage de courant (24) est relié à une tige de poussée (26) à l'aide d'une connexion filetée, le fond de la tige de poussée (26) est doté d'un bouchon étanche (27) qui peut rendre étanche les trous de passage d'eau (251) par déplacement vers le bas le long de la tige de poussée (26).

2. Ensemble de robinet selon la revendication 1, **caractérisé en ce qu'**un conduit d'entrée (31) et un conduit de sortie (32) communiquant respectivement avec le passage d'entrée (21) et le passage de sortie (22) sont formés sur le corps principal supérieur (3) ; une cavité de retenue de sac à gaz (33) avec une extrémité d'ouverture est prévue sur le corps principal supérieur (3), le conduit d'entrée (31) communique avec une extrémité opposée à l'extrémité d'ouverture, un sac à gaz de sécurité (34) est agencé dans la cavité de retenue de sac à gaz (33), et le sac à gaz de sécurité est un cylindre creux et comprend des anneaux de fixation (341) sur les deux extrémités et une concavité intérieure R (342) fixée entre deux anneaux de fixation (341), le sac à gaz de sécurité (34) est agencé autour d'un même axe avec la cavité de retenue de sac à gaz (33), l'extrémité d'ouverture de la cavité de retenue de sac à gaz (33) est reliée à un premier bouchon d'extrémité (35), le premier bouchon d'extrémité (35) obture l'extrémité d'ouverture par coordination avec un anneau étanche.

3. Ensemble de robinet selon la revendication 2, **caractérisé en ce qu'**une pluralité de nervures de renforcement (343) sont distribuées uniformément sur la concavité intérieure R (342) du sac à gaz de sécurité (34), les deux extrémités des nervures de renforcement sont reliées aux anneaux de fixation (341).

4. Ensemble de robinet selon la revendication 3, **caractérisé en ce qu'**une cavité pour le rayonnage d'un élément de filtre (36) est agencée sur le passage du conduit d'entrée (31), dont le dessus est scellé par un second bouchon d'extrémité (37) coopérant avec un anneau étanche et dans lequel un filtre (38) est monté.

5. Ensemble de robinet selon la revendication 1, **caractérisé en ce que** les pieds de montage (11) comprennent une bosse de saillie (12), un trou de liaison étendu longitudinalement (13) est formé sur la bosse (12), des parois latérales de la bosse (12) sont agencées avec un trou débouchant (14) s'étendant par le trou de liaison (13), un pilier de blocage (15) est inséré dans le trou de liaison (13) et un second pied de montage (16) est formé sur le dessus du pilier de blocage (15) par expansion horizontale, le second pied de montage (16) est doté d'un trou de montage (161) pour une vis, une pluralité de fentes de blocage (17) sont formées dans le pilier de blocage (15) dans une direction perpendiculaire à la profondeur de trou des trous de passage (14), les fentes de blocage (17) sont agencées sur les piliers de blocage (15) longitudinalement ; et comprennent aussi un tableau de connexion (7), dans lequel une perforation allongée (71) est prévue dans l'extrémité avant du tableau de connexion (7), un dévissage (72) est agencé sur l'extrémité avant de la paroi de la perforation allongée (71) et le dévissage (72) se voûte dans les fentes de blocage (17) des piliers de blocage (15) après que le tableau de connexion (7) est inséré dans les trous de passage (14).

6. Ensemble de robinet selon la revendication 5, **caractérisé en ce qu'**une pluralité de fentes de renonciation (18) renonçant à la fois aux bords de la fente de la perforation allongée (71) alors que la perforation allongée (71) est frappée pour s'ouvrir, sont formées sur la bosse (13), et les fentes de renonciation (18) communiquent avec les trous de liaison (13).

7. Ensemble de robinet selon la revendication 5, **caractérisé en ce que** le panneau (6) comprend un panneau plastique (61), sur lequel des trous de renonciation (62) pour le coeur de valve sont formés, le panneau plastique (61) est couvert d'un panneau de décoration (63), le panneau de décoration (63) comprend une pluralité de trous centraux (64) correspondant aux positions des trous de renonciation (62) pour le coeur de valve, les parois des trous centraux (64) sont dotées d'une pluralité de lignes relevées (65) ; et comprend aussi un panneau d'identification (66) fabriqué dans une technologie de laminage et couvert d'un marquage, le panneau d'identification (66) est formé d'une pluralité de trous de renonciation centraux (67), une pluralité de boucles gonflées (68) est formée sur la surface d'extrémité inférieure du panneau d'identification (66), dans lequel le diamètre extérieur du fond des boucles gonflées (68) est supérieur à celui du dessus des boucles gonflées (68) et ainsi une structure de dévissage (69) est formée, après que le panneau d'identification (66) est pressé dans les trous centraux (64) du panneau de décoration (63), la structure de dévissage (69) est fixée le long du bord de trou inférieur des trous centraux (64), et les boucles gonflées (68) sont formées avec une pluralité de fentes (681) adaptées aux lignes relevées (65), la surface d'extrémité inférieure du panneau d'identification (66) est aussi formée avec une structure de fente de blocage (691) coaxiale aux trous de renonciation centraux (67), un anneau en forme de O est agencé dans la structure de fente de blocage (691).

8. Ensemble de robinet selon la revendication 7, **caractérisé en ce qu'**une surface d'extrémité inférieure du panneau d'identification (66) est formée avec un anneau convexe intérieur (661), la paroi de cercle interne de l'anneau convexe intérieur (661) est formée d'une pluralité de dents renflées (662) distribuées circulairement et uniformément, dans lequel les dents renflées (662), l'anneau convexe intérieur (661) et le panneau d'identification (66) constituent ensemble la structure de fente de blocage (691).

9. Ensemble de robinet selon la revendication 1, **caractérisé en ce que** la tige de poussée (26) est reliée à la cavité de guidage de courant (24) par une pièce d'adaptation (8), où la pièce d'adaptation (8) est dotée d'un filet interne et d'un filet externe (81, 82) qui est relié respectivement à la tige de poussée (26) et la cavité de guidage de courant (24), et la pièce d'adaptation (8) est formée avec un trou de passage (83) coaxial au filet interne (81), le dessus de la tige de poussée (26) colle dans ou s'étend par le trou de passage (83), et une fente de tournevis (261) est agencée sur le dessus de la tige de poussée (26) ; et la pièce d'adaptation (8) comprend aussi un anneau convexe (84) résistant à l'extrémité d'ouverture de la cavité de guidage de courant (24), une fente à rayonnage (85) pour un anneau étanche est agencée sous l'anneau convexe (84), et l'anneau étanche dans la fente à rayonnage (85) forme un joint entre la pièce d'adaptation (8) et la cavité de guidage de courant (24).

10. Ensemble de robinet selon la revendication 1, **caractérisé en ce que** des anneaux étanches fixés (113) sont agencés entre le passage d'entrée et le passage de sortie (211, 212) du corps principal inférieur (2) et le logement (1), et les anneaux étanches fixés (113) comprennent un trou circulaire intérieur (114) renonçant aux passage d'entrée et passage de sortie (211, 212) correspondants, le trou circulaire intérieur (114) est doté d'une bride intérieure R (115) ; les parois périphériques des anneaux étanches fixés (113) sont agencées avec une bride extérieure (116), et le logement (1) est doté d'une fente interne (117) adaptée à la bride extérieure (116).
